(19) **Europäisches Patentamt / European Patent Office / Office européen des brevets**

(11) **EP 4 738 461 A1**

(12) **EUROPEAN PATENT APPLICATION**
published in accordance with Art. 153(4) EPC

(43) Date of publication:
06.05.2026 Bulletin 2026/19

(21) Application number: 24898184.7

(22) Date of filing: 29.11.2024

(51) International Patent Classification (IPC):
$H01M\ 4/36$ (2006.01)   $H01M\ 4/485$ (2010.01)
$H01M\ 4/66$ (2006.01)   $H01M\ 10/052$ (2010.01)
$C01G\ 45/12$ (2025.01)   $H01M\ 4/02$ (2006.01)

(52) Cooperative Patent Classification (CPC):
C01G 45/12; H01M 4/02; H01M 4/36; H01M 4/485;
H01M 4/66; H01M 10/052; Y02E 60/10

(86) International application number:
PCT/KR2024/019232

(87) International publication number:
WO 2025/116590 (05.06.2025 Gazette 2025/23)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.11.2023  KR 20230169859
28.11.2024  KR 20240173826

(71) Applicant: LG Energy Solution, Ltd.
Seoul 07335 (KR)

(72) Inventors:
• KIM, Dong Hwi
  Daejeon 34122 (KR)
• JEON, Hyelim
  Daejeon 34122 (KR)
• SHIN, Seungsun
  Daejeon 34122 (KR)
• RYU, Kihoon
  Daejeon 34122 (KR)
• JANG, Joonhyuk
  Daejeon 34122 (KR)

(74) Representative: Hoffmann Eitle
Patent- und Rechtsanwälte PartmbB
Arabellastraße 30
81925 München (DE)

(54) **POSITIVE ACTIVE MATERIAL FOR LITHIUM SECONDARY BATTERY, PREPARATION METHOD THEREFOR, POSITIVE ELECTRODE COMPRISING SAME, AND LITHIUM SECONDARY BATTERY**

(57)   According to an embodiment of the present disclosure, there is provided a positive electrode active material for lithium secondary battery comprising:

a lithium compound represented by the following Chemical Formula 1, and a coating layer formed on the surface of particles of the lithium compound.

wherein the coating layer includes a carbon and a surface modifier, and

wherein the positive electrode active material has a D/G band ratio value of 0.7 to 0.89 when its surface is measured by Raman spectroscopy.

[Chemical Formula 1]   $Li_{1+a}Ti_bMn_cO_{2-d}X_d$

in Chemical Formula 1,
$0.1{\le}a{\le}0.5$, $0.2{\le}b{\le}0.6$, $0.2{\le}c{\le}0.6$, $1.1{\le}(1+a)/(b+c){\le}1.5$, $0{\le}d{\le}0.2$, and
X is a halogen element, a method for preparing the same, a positive electrode and a lithium secondary battery including the same.

EP 4 738 461 A1

[FIG. 1]

**Description**

**[TECHNICAL FIELD]**

Cross-Reference to Related Application(s)

This application claims priority to and the benefit of Korean Patent Application No. 10-2023-0169859, filed on November 29, 2023, and Korean Patent Application No. 10-2024-0173826, filed on November 28, 2024, with the Korean Intellectual Property Office, the disclosures of which are incorporated herein by reference in their entirety.

The present disclosure relates to a positive electrode active material for lithium secondary battery, a method for preparing the same, a positive electrode and a lithium secondary battery including the same.

**[BACKGROUND]**

Due to the rapid increase in the use of fossil fuels, the demand for the use of alternative energy or clean energy is increasing, and as a part thereof, the fields that are being studied most actively are the fields of power generation and power storage using electrochemistry.

Currently, a secondary battery is a representative example of an electrochemical device that utilizes such electrochemical energy, and the range of use thereof tends to be gradually expanding.

Recently, with the increase of the technological development and demand for mobile devices such as portable computers, portable phones, and cameras, demand for secondary batteries as an energy source rapidly increases. Among such secondary batteries, many studies have been conducted on a lithium secondary battery that exhibit high energy density and operating potential, have a long cycle life, and a low self-discharge rate, and has been commercialized and widely used.

In addition, as interest in environmental issues grows, studies are frequently conducted on an electric vehicle, a hybrid electric vehicle, etc. which can replace a vehicle using fossil fuels such as a gasoline vehicle and a diesel vehicle, which are one of the main causes of air pollution. Although a nickel metal hydride secondary battery is mainly used as a power source for the electric vehicle and the hybrid electric vehicle, numerous studies have been actively made to use a lithium secondary battery having a high energy density and a high discharge voltage, a part of which are in the commercializing stage.

A lithium secondary battery generally has a structure in which a non-aqueous electrolytic solution is impregnated into an electrode assembly including a positive electrode, a negative electrode and a porous separator. In general, the positive electrode is prepared by coating a positive electrode mixture containing a positive electrode active material onto an aluminum foil, and the negative electrode is prepared by coating a negative electrode mixture containing a negative electrode active material onto a copper foil.

Usually, the positive electrode active material is a lithium transition metal oxide, and the negative electrode active material is a carbon-based material.

Recently, however, as lithium secondary batteries are used in various industrial fields, high capacity and high rate characteristics are being studied as important performances, and thus, the positive electrode active materials capable of exhibiting such characteristics are being actively developed.

The material that has recently been in the spotlight as such a positive electrode active material is DRX (cation-disordered rock salt transition metal oxide), and this material is a high-capacity material that can express further capacity through not only cation oxidation/reduction but also anion oxidation/reduction reactions (oxygen redox).

However, such materials have problems such as gas emission during high-voltage operation of lithium secondary batteries and degradation of lifetime characteristics caused by increased resistance of the material itself, and thus, improvements thereto remain an issue.

Therefore, there is an urgent need to develop technology that can solve these problems and achieve secondary battery performance such as high capacity, high rate, and excellent lifetime characteristics.

**[DETAILED DESCRIPTION OF THE INVENTION]**

**[Technical Problem]**

It is an object of the present disclosure to provide a positive electrode active material for lithium secondary battery that can exhibit high capacity, high rate and excellent lifetime characteristics, and a method for preparing the same.

It is another object of the present disclosure to provide a positive electrode including such a positive electrode active material and a lithium secondary battery including the same.

**[Technical Solution]**

According to an embodiment of the present disclosure, there is provided a positive electrode active material for lithium secondary battery comprising:

a lithium compound represented by the following Chemical Formula 1, and a coating layer formed on the surface of particles of the lithium compound.
wherein the coating layer includes a carbon and a surface modifier, and
wherein the positive electrode active material has a D/G band ratio value of 0.7 to 0.89 when its surface is measured by Raman spectroscopy.

[Chemical Formula 1]  $Li_{1+a}Ti_bMn_cO_{2-d}X_d$

in Chemical Formula 1,
$0.1 \leq a \leq 0.5$, $0.2 \leq b \leq 0.6$, $0.2 \leq c \leq 0.6$, $1.1 \leq (1+a)/(b+c) \leq 1.5$, $0 \leq d \leq 0.2$, and
X is a halogen element.

Specifically, in Chemical Formula 1, $b+c=0.8$.

The positive electrode active material may have an average primary particle diameter(D50) of 10 to 100 nanometers and an average secondary particle diameter(D50) of 0.5 to 1.5 micrometers.

Meanwhile, the contents of the carbon and the surface modifier may be 0.5 to 1.5 wt.% based on the total weight of the positive electrode active material, respectively, and the total content of both of them may be 1 to 3 wt.% based on the total weight of the positive electrode active material.

The surface modifier is a nonionic surface modifier, which may be at least one selected from the group consisting of polyvinylpyrrolidone(PVP) and polyvinyl chloride(PVC).

According to another embodiment of the present disclosure, there is provided a method for preparing the positive electrode active material for lithium secondary battery, which is prepared by a solid phase method based on a mixture containing an active material precursor, a carbon precursor, and a surface modifier.

In this case, the active material precursor may be a lithium source, a manganese source, and a titanium source.

Further, the carbon precursor may be at least one selected from the group consisting of citric acid and sucrose.

Furthermore, the surface modifier is a nonionic surface modifier, which may be at least one selected from the group consisting of polyvinylpyrrolidone(PVP) and polyvinyl chloride(PVC).

The solid phase method may involve calcinating the mixture at 550°C to 1050°C in an inert atmosphere.

According to yet another embodiment of the present disclosure, there is provided a positive electrode in which a positive electrode mixture layer containing the positive electrode active material is formed on one side or both sides of a positive electrode current collector.

Herein, a ratio of the content of carbon to the content of carbon and metal (Ti and Mn) represented by the following Equation 1 in the positive electrode active material may be 0.75 to 0.9.

$$[\text{Equation 1}]$$

$$\text{C content}/(\text{C+Metal}) \text{ content}$$

According to yet another embodiment of the present disclosure, there is provided a lithium secondary battery comprising the positive electrode.

**[BRIEF DESCRIPTION OF THE DRAWING]**

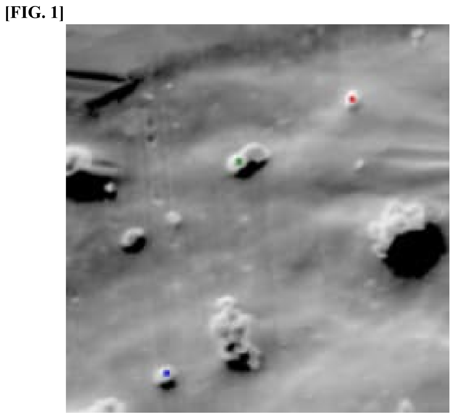

FIG. 1 is an SEM photograph of a part of the surface of the positive electrode according to Experimental Example 2.

**[DETAILED DESCRIPTION OF THE EMBODIMENTS]**

Hereinafter, terms or words used in the present specification and claims should not be construed as being limited to ordinary or dictionary meanings, and the present disclosure should be construed with meanings and concepts that are consistent with the technical idea of the present disclosure based on the principle that the inventors may appropriately define concepts of the terms to appropriately describe their own invention in the best way.

Unless defined otherwise, all terms (including technical and scientific terms) used herein may be used as meanings that can be commonly understood by those of ordinary skill in the art to which the present disclosure belongs. In addition, terms defined in a commonly used dictionary are not interpreted ideally or excessively unless specifically explicitly defined.

The terms used herein are provided to describe the embodiments but not to limit the inventive concept. In the specification, the singular forms include plural forms unless the context clearly indicates otherwise. The terms "comprises" and/or "comprising" as used herein does not exclude the existence or the addition of one or more elements other than those mentioned.

Meanwhile, the terms "consists of" and/or "consisting of" as used herein mean that in addition to the recited components, other components are not contained more than impurity levels, i.e., trace amounts.

## Positive electrode active material

A positive electrode active material for lithium secondary battery according to an embodiment of the present disclosure comprises:

a lithium compound represented by the following Chemical Formula 1, and a coating layer formed on the surface of particles of the lithium compound.
wherein the coating layer includes a carbon and a surface modifier, and
wherein the positive electrode active material has a D/G band ratio value of 0.7 to 0.89 when its surface is measured by Raman spectroscopy.

$$[\text{Chemical Formula 1}] \qquad Li_{1+a}Ti_bMn_cO_{2-d}X_d$$

in Chemical Formula 1,
$0.1 \le a \le 0.5$, $0.2 \le b \le 0.6$, $0.2 \le c \le 0.6$, $1.1 \le (1+a)/(b+c) \le 1.5$, $0 \le d \le 0.2$, and
X is a halogen element.

Herein, the lithium compound represented by Chemical Formula 1 may be DRX, and specifically, in the Chemical Formula 1, $b+c=0.8$.

Further, $0.2 \le a \le 0.4$, $0.3 \le b \le 0.5$, $0.3 \le c \le 0.5$.

Most specifically, the lithium compound may be $Li_{1.2}Ti_{0.4}Mn_{0.4}O_2$.

The lithium compound is used in a form in which a carbon coating is applied to the surface to improve conductivity, but the carbon coating tends to be agglomerated rather than evenly distributed due to the characteristics of the carbon, which makes it difficult to achieve a uniform coating, and as a result, there was a problem that an excellent conductive network cannot be formed.

However, it has been confirmed that when the positive electrode active material according to the present disclosure includes a surface modifier together in the carbon coating of the lithium compound, it is possible to solve such problems while increasing the surface crystallinity and improving the coating uniformity, so that the D/G band ratio value becomes 0.7 to 0.89 by the formation of a coating layer including the carbon and surface modifier, thereby exhibiting excellent effects.

Herein, the D/G band ratio value is an index showing the crystallinity of the surface of the positive electrode active material.

The D/G band ratio value can be measured and calculated by Raman spectroscopy. Specifically, the crystallinity can be determined from the peak intensity ratio value for the G band 1700/cm and D band 1400/cm, which are the main peak regions of carbon, in addition to the peak as represented by the lithium compound in the Raman spectrum measured by Raman spectroscopy. It is considered that as such a value decreases, the crystallinity increases.

The positive electrode active material according to the present disclosure may have a D/G band ratio value of its surface of 0.7 to 0.89, specifically 0.7 to 0.85, and more specifically 0.75 to 0.8.

In comparison with cases where a surface modifier is not used or where a positive electrode active material, carbon, and a surface modifier are simply mixed, which mostly have a value of 0.9 or more, the positive electrode active material of the present disclosure has excellent surface crystallinity and enables uniform coating because a coating layer including carbon is formed by using a surface modifier from the precursor stage of the positive electrode active material as described below.

At this time, it has been found that the content of carbon and the content of the surface modifier included in the coating layer are very important factors that affect these characteristics. Herein, the contents of the carbon and the surface modifier showing the most excellent effect may respectively be 0.1 to 3 wt.%, specifically 0.5 to 2 wt.%, and more specifically 0.5 to 1.5 wt.%, based on the total weight of the positive electrode active material.

More specifically, the content of the carbon may be 1 to 1.5 wt.%, or 1.1 to 1.4 wt.% based on the total weight of the positive electrode active material, and the content of the surface modifier may be 0.5 to 1 wt.%, or 0.6 to 0.9 wt.% based on the total weight of the positive electrode active material.

In addition, the total content of both of them may be 0.5 to 5 wt.%, specifically 1 to 3 wt.%, and more specifically 1.5 to 2 wt.%, based on the total weight of the positive electrode active material.

If the content of carbon is too small and outside the above range, a sufficient conductive network cannot be formed, which is not preferable, and if the content of carbon is too large, there is a problem that a phenomenon where these are aggregated together occurs, thereby causing agglomeration and making it difficult to achieve a uniform coating.

In addition, if the content of the surface modifier is too small, the carbon agglomeration phenomenon cannot be eliminated and thus, the conductivity cannot be improved, and if the content of the surface modifier is too large, there is a problem that the resistance increases due to the resistance of the surface modifier, which reduces the lifetime characteristics.

Furthermore, if the total content is larger, there is also a problem that the resistance increases, and if the total content is smaller, the carbon content also decreases and thus the effect of improving the conductivity cannot be achieved.

Herein, the surface modifier is not limited as long as it is a type of surfactant that can be used in a lithium secondary battery, but specifically, it may be a nonionic surface modifier. For example, the surface modifier may be may be at least one selected from the group consisting of polyethylene glycol, ethoxylated fatty alcohol, ethoxylated fatty acid, ethoxylated alkyl phenol, alkanolamide (fatty acid alkanolamide), ethoxylated fatty acid alkanolamide, fatty amine oxide, fatty amido amine oxide, glyceryl fatty acid ester, sorbitan, ethoxylated sorbitan ester, alkyl poly glycoside, ethylene/propylene oxide copolymer, ethoxylated-propoxylated fatty alcohol, polyvinylpyrrolidone(PVP), and polyvinyl chloride (PVC). Specifically, the surface modifier may be at least one selected from the group consisting of polyvinylpyrrolidone(PVP) and polyvinyl chloride(PVC), and more specifically, it may be polyvinylpyrrolidone(PVP).

Herein, the number average molecular weight of polyvinylpyrrolidone(PVP) may be 20,000 to 40,000.

The number average molecular weight(Mn) was measured by a gel permeation chromatography(GPC, PL GPC220, Agilent Technologies) under the following conditions.

- Column: PL MiniMixed B x 2
- Solvent: THF
- Flow rate: 0.3 ml/min
- Sample concentration: 2.0 mg/ml
- Injection amount: 10 $\mu\ell$
- Column temperature: 40°C
- Detector: Agilent RI detector
- Standard: Polystyrene (corrected with a 3rd order function)
- Data processing: ChemStation

If the number average molecular weight is less than 20,000 and outside the above range, coating is not performed well, and if the number average molecular weight is greater than 40,000, the dispersibility is deteriorated, which is not preferable.

Meanwhile, the positive electrode active material having such a composition and structure may have a form of secondary particles having a structure in which primary particles are aggregated.

At this time, the average diameter(D50) of the primary particles may be 10 to 100 nanometers, and the average diameter(D50) of the secondary particles may be 0.5 to 1.5 micrometers.

The average diameter D50 is a particle diameter at the 50% point in the volume cumulative particle size distribution according to the particle diameter. The D50 may be measured by a laser diffraction method. Specifically, the D50 may be measured by dispersing a powder to be measured in a dispersion medium, which is then introduced into a commercially available laser diffraction particle size analyzer (e.g., Microtrac S3500), measuring a difference in diffraction patterns according to the particle size when particles passes through a laser beam, and then calculating a particle size distribution. The D50 may be measured by calculating a particle diameter at the 50% point in the volume cumulative particle size distribution according to the particle diameter in a measurement device.

## Method for preparing the positive electrode active material

Such a positive electrode active material is prepared by a solid phase method based on a mixture containing an active material precursor, a carbon precursor, and a surface modifier.

Herein, the active material precursor is a composition material forming a lithium compound represented by Chemical Formula 1, which may be a lithium source, a manganese source, and a titanium source.

The lithium source may be one or more materials selected from lithium carbonate, lithium hydroxide, and lithium phosphate, and more specifically, it may be lithium hydroxide(LiOH). The manganese source may be one or more materials selected from manganese sulfate, manganese nitrate, manganese carbonate, manganese acetate, manganese chloride, manganese hydroxide, manganese oxide, and manganese phosphate, and more specifically, it may be manganese oxide ($MnO_2$).

The titanium source may be one or more materials selected from titanium sulfate, titanium nitrate, titanium carbonate, titanium acetate, titanium chloride, titanium hydroxide, titanium oxide, and titanium phosphate, and more specifically, it may be titanium oxide ($TiO_2$).

In addition, in order to improve the conductivity of these active materials, the carbon precursor is introduced together from the synthesis step of the lithium compound. That is, it is mixed together with the active material precursor.

At this time, the carbon precursor may be one or more materials selected from citric acid, glucose, sucrose, graphite, carbon nanotubes, and carbon black, and more specifically, it may be at least one selected from the group consisting of citric acid and sucrose.

Further, the surface modifier is also added together in the synthesis step for even dispersion of the carbon precursor, wherein the surface modifier may be a nonionic surface modifier, and may use the materials described above. Specifically, it may be at least one selected from the group consisting of polyvinylpyrrolidone(PVP), and polyvinyl chloride(PVC), and more specifically, polyvinylpyrrolidone(PVP).

Meanwhile, the positive electrode active material is prepared by synthesizing a mixture of these materials by a solid phase method.

The solid phase method is a method achieved by mixing these mixtures in a dry form via ball milling, followed by calcination.

According to the present disclosure, the active material precursor sources are mixed in accordance with the stoichiometric ratio of Chemical Formula 1, and a carbon precursor and a surface modifier can be added thereto, so that the contents of the carbon and the surface modifier based on these raw materials is in the above range, i.e., 0.1 to 3 wt.%, specifically 0.5 to 2 wt.%, and more specifically 0.5 to 1.5 wt.%, based on the total weight of the positive electrode active material, and most specifically, the content of the carbon is 1 to 1.5 wt.% based on the total weight of the positive electrode active material, and the content of the surface modifier is 0.5 to 1 wt.% based on the total weight of the positive electrode active material.

Further, the carbon precursor and the surface modifier may be added, so that the total content of the carbon and surface modifier is 0.5 to 5 wt.%, specifically 1 to 3 wt.%, and more specifically 1.5 to 2 wt.%, based on the total weight of the positive electrode active material.

The positive electrode active material can be prepared by placing a powder mixture of the active material precursor, carbon precursor and surface modifier into a zirconia container, milling the mixture using a zirconia ball, followed by calcination.

At this time, the calcination may be performed by heat-treating the mixture at 550°C to 1050°C in an inert atmosphere.

More specifically, the calcination can be performed in two steps. For example, the first step can be performed at a temperature in the range of 500 to 800°C under an inert atmosphere for 1 to 6 hours, and the second step can be performed at a temperature in the range of 800 to 1200°C under an inert atmosphere for 6 to 20 hours.

The positive electrode active material prepared by the solid phase method can be obtained in a form in which a carbon is uniformly coated on the surface of the lithium compound represented by the Chemical Formula 1 containing the lithium, manganese, and titanium. From the precursor stage, the carbon precursor and the surface modifier are mixed together and calcined, which improves the surface crystallinity, so that the value of the D/G band ratio measured by Raman spectroscopy can satisfy the range of 0.7 to 0.89.

Therefore, according to the present disclosure, even with a small amount of carbon, it is possible to increase the crystallinity of the surface of the positive electrode active material and enable uniform coating, thereby exhibiting the effects of sufficiently improving the conductivity and also improving the surface stability and lifetime characteristics.

**Positive electrode**

According to yet another embodiment of the present disclosure, there is provided a positive electrode in which a positive electrode mixture layer containing the positive electrode active material is formed on one side or both sides of a positive electrode current collector.

After producing the positive electrode, a ratio of the content of carbon to the content of carbon and metal (Ti and Mn) represented by the following Equation 1 in the positive electrode active material may be 0.75 to 0.9, and specifically 0.77 to 0.85.

[Equation 1]

$$\text{C content}/(\text{C+Metal}) \text{ content}$$

The ratio of the content of carbon to the content of carbon and metal (Ti and Mn) represented by Equation 1 can be measured by photographing the positive electrode surface with a SEM, selecting an area within a few hundred nm in diameter, and measuring the Auger spectrum using an AES (Auger electron spectroscopy) device (PHI 710, ULVAC-PHI INC). Specifically, 24 points of measurement areas are selected for each sample and measured, and an Auger spectrum was obtained at each point, and then the ratio may be determined by dividing the content of C by the sum of the contents of C and metal (Ti, and/or Mn).

From this, it can be seen that as the value is closer to 1, the metal content of the surface is smaller, and the carbon coating is better performed, thereby achieving coating uniformity.

The positive electrode current collector is not particularly limited so long as it has conductivity without causing any chemical change in the battery. For example, as the current collector, stainless steel, aluminum, nickel, titanium, fired carbon, or aluminum or stainless steel of which surface is treated with one of carbon, nickel, titanium, silver, or the like may be used.

The positive electrode current collector may have a thickness of $3\mu m$ to $500\mu m$, and may have fine protrusions and depressions formed on a surface thereof to enhance adherence of a positive electrode active material layer. For example, the positive electrode current collector may be used in various forms such as a film, a sheet, a foil, a net, a porous body, a foaming body, and a non-woven fabric structure.

The positive electrode mixture layer may include a positive electrode active material, and optionally, a conductive material, a binder, and other additives.

The positive electrode mixture layer may in addition to the positive electrode active material, further include a compound capable of reversible intercalation and deintercalation of lithium, and examples thereof may include a lithium metal oxide including one or more metals such as cobalt, manganese, nickel, or aluminum with lithium. Specifically, examples of the lithium composite metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $Li_{1+x'}N_{1-Y}Mn_YO_2$(where $-0.5 \leq x' \leq 0.5$, $0 < Y < 1$), $Li_{1+x''}Mn_{2-Z}NizO_4$(where $-0.5 \leq x'' \leq 0.5$, $0 < Z < 2$), etc.), lithium-nickel-cobalt-based oxide (e.g., $Li_{1+x'''}Ni_{1-Y1}Co_{Y1}O_2$(where $-0.5 \leq x''' \leq 0.5$, $0 < Y1 < 1$), etc.), lithium-manganese-cobalt-based oxide (e.g., $Li_{1+x''''}Co_{1-Y2}Mn_{Y2}O_2$(where, $-0.5 \leq x'''' \leq 0.5$, $0 < Y2 < 1$), $Li_{1+x'''''}Mn_{2-Z1}Co_{Z1}O_4$(where $-0.5 \leq x''''' \leq 0.5$, $0 < Z1 < 2$), etc.), lithium-nickel-manganese-cobalt-based oxide (e.g., $Li_{1+a1}(Ni_pCo_qMn_r)O_2$(where $-0.5 \leq a1 \leq 0.5$, $0 < p < 1$, $0 < q < 1$, $0 < r < 1$, $p+q+r=1$) or $Li_{1+a2}(Ni_{p1}Co_{q1}Mn_{r1})O_4$ (where $-0.5 \leq a2 \leq 0.5$, $0 < p1 < 2$, $0 < q1 < 2$, $0 < r1 < 2$, $p1+q1+r1=2$), etc.), or lithium-nickel-cobalt-transition metal(M) oxide (e.g., $Li_{1+a3}(Ni_{p2}Co_{q2}Mn_{r2}M_{s2})O_2$ (where M is selected from the group consisting of Al, Fe, V, Cr, Ti, Ta, Mg and Mo, and a3, p2, q2, r2 and s2 are atomic fractions of each independent elements, wherein $-0.5 \leq a3 \leq 0.5$, $0 < p2 < 1$, $0 < q2 < 1$, $0 < r2 < 1$, $0 < s2 < 1$, $p2+q2+r2+s2=1$), etc.), lithium iron phosphate (e.g., $Li_{1+a4}Fe_{1-p3}M_{p3}(PO_{4-b4})X_{b4}$ (where M is at least one selected from Al, Mg, and Ti, X is at least one selected from F, S, and N, and $-0.5 \leq a4 \leq 0.5$, $0 \leq p3 \leq 0.5$, $0 \leq b4 \leq 0.1$), and any one thereof or a compound of two or more thereof may be included.

Of course, the positive electrode active material according to the present disclosure may be included as a main material, and based on the total amount of materials acting as active materials capable of reversible intercalation and deintercalation of lithium, the positive electrode active material according to the present disclosure may be included in an amount of 80 wt.% or more, specifically 90 wt.% or more and 100 wt.% or less, and the material acting as an active material may include only the positive electrode active material according to the present disclosure in an amount of 100 wt.%.

The conductive material is a component for further improving the conductivity of the positive electrode active material. Such a conductive material is not particularly limited as long as it has conductivity without causing any chemical change in the battery, and, for example, carbon powder such as carbon black, acetylene black, Ketjen black, channel black, furnace black, lamp black, or thermal black; graphite powder such as natural graphite with a well-developed crystal structure, artificial graphite, or graphite; conductive fibers such as carbon fibers or metal fibers; fluorinated carbon powder; conductive powder such as aluminum powder, and nickel powder; conductive whiskers such as zinc oxide whiskers and potassium titanate whiskers; conductive metal oxide such as titanium oxide; or conductive materials such polyphenylene derivatives, may be used.

The conductive material may be contained in an amount of 0.1 to 20 wt.%, specifically 0.5 to 10 wt.%, and more specifically 0.5 to 5 wt.%, based on the total weight of the positive electrode mixture layer.

The binder is a component that assists in the bonding between the conductive material, the positive electrode active material and the positive electrode current collector. Examples of the binder may include polyvinylidene fluoride (PVDF), polyvinyl alcohol, carboxymethylcellulose(CMC), starch, hydroxypropyl cellulose, regenerated cellulose, polyvinylpyrrolidone, polytetrafluoroethylene, polyethylene, polypropylene, ethylene-propylene-diene monomer, sulfonated ethylene-propylene-diene monomer, styrene-butadiene rubber, fluororubber, various copolymers thereof, or the like.

Typically, the binder may be included in an amount of 0.5 to 20wt.%, specifically 0.5 to 10 wt.%, and more specifically 0.5 to 5 wt.% based on the total weight of the positive electrode mixture layer.

In addition, the other additives may further include, for example, a filler and the like as a component for inhibiting the expansion. The filler is not particularly limited as long as it can inhibit the expansion of the electrode without causing any chemical change in the battery, and examples thereof may include olefinic polymers such as polyethylene and polypropylene; fibrous materials such as glass fibers and carbon fibers.

**Lithium secondary battery**

Meanwhile, according to yet another embodiment of the present disclosure, a lithium secondary battery comprising the positive electrode is provided.

The lithium secondary battery has a structure in which an electrode assembly containing a negative electrode, a separator, and the positive electrode is embedded together with an electrolyte in a secondary battery case.

Herein, a negative electrode has a structure in which a negative electrode mixture layer containing a negative electrode active material is formed on one side or both sides of the negative electrode current collector, and the negative electrode mixture layer may, in addition to the negative electrode active material, further include electrode materials such as a conductive material and a binder as described in the positive electrode.

The negative electrode current collector is not particularly limited as long as it has high conductivity without causing any chemical change in the battery. Examples of the negative electrode current collector may include copper, stainless steel, aluminum, nickel, titanium, fired carbon, a copper or stainless steel of which surface is treated with carbon, nickel, silver, or the like, an aluminum-cadmium alloy, or the like.

The negative electrode current collector may typically have a thickness of 3 to $500\mu$m. Similarly to the positive electrode current collector, the negative electrode current collector may have fine protrusions and depressions formed on the surface thereof to enhance the bonding force of the negative electrode active material. For example, the negative electrode current collector may be used in various forms such as a film, a sheet, a foil, a net, a porous body, a foaming body, and a nonwoven fabric structure.

The negative electrode active material layer may include at least one selected from the group consisting of a lithium metal, a carbon material capable of reversible intercalation/deintercalation of lithium ions, metals or alloys of lithium and these metals, a metal composite oxide, a material capable of doping and de-doping lithium, and a transition metal oxide.

As the carbon material capable of reversible intercalation/deintercalation of lithium ions, any carbon material may be used without particular limitation so long as it is a carbon-based negative electrode active material generally used in a lithium ion secondary battery, and, as a representative example thereof, crystalline carbon, amorphous carbon, or both thereof may be used. Examples of the crystalline carbon may be graphite such as irregular, planar, flaky, spherical, or fibrous natural graphite or artificial graphite, and examples of the amorphous carbon may be soft carbon (low-temperature calcinated carbon) or hard carbon, mesophase pitch carbide, fired cokes, and the like.

As the metals or alloys of lithium and these metals, metals selected from the group consisting of Cu, Ni, Na, K, Rb, Cs, Fr, Be, Mg, Ca, Sr, Si, Sb, Pb, In, Zn, Ba, Ra, Ge, Al and Sn or alloys of lithium and these metals may be used.

As the metal composite oxide, at least one selected from the group consisting of PbO, $PbO_2$, $Pb_2O_3$, $Pb_3O_4$, $Sb_2O_3$, $Sb_2O_4$, $Sb_2O_5$, GeO, $GeO_2$, $Bi_2O_3$, $Bi_2O_4$, $Bi_2O_5$, $LixFe_2O_3$(where $0 \leq x < 1$), $Li_xWO_2$(where $0 \leq x \leq 1$) and $Sn_xMe_{1-x}Me'_yO_z$ (where Me: Mn, Fe, Pb, Ge; Me': Al, B, P, Si, Group I, II and III elements of the periodic table, halogen; $0<x\leq1$; $1\leq y\leq3$; $1\leq z\leq8$) may be used.

The material which may be doped and undoped with lithium may include Si, $SiO_x$($0<x\leq2$), Si-Y alloy (where Y is an element selected from the group consisting of an alkali metal, an alkaline earth metal, a Group 13 element, a Group 14 element, a transition metal, a rare earth element, and a combination thereof, and is not Si), Sn, $SnO_2$, Sn-Y (where Y is an element selected from the group consisting of an alkali metal, an alkaline earth metal, a Group 13 element, a Group 14 element, a transition metal, a rare earth element, and a combination thereof, and is not Sn), or the like, and at least one of these may be mixed and used with $SiO_2$. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

The transition metal oxide may include a lithium-containing titanium composite oxide (LTO), vanadium oxide, lithium vanadium oxide, and the like.

The negative electrode active material may be included in an amount of 60 to 99 wt.%, preferably 80 to 99 wt.%, and more preferably 90 to 98 wt.%, based on the total weight of the negative electrode mixture layer.

When the metal itself is used without forming a negative electrode mixture layer on the negative electrode, it can be manufactured by a method of physically joining, rolling, or depositing a metal on the metal thin film itself or the negative electrode current collector. As the deposition method, an electrical deposition method or a chemical vapor deposition method of the metal may be used.

For example, the metal thin film itself or the metal joined/rolled/deposited on the negative electrode current collector may include one type of metal selected from the group consisting of lithium(Li), nickel(Ni), tin(Sn), copper(Cu), and indium(In), or an alloy of two types thereof.

The separator can be used without particular limitation as long as it is commonly used as a separator in a lithium secondary battery, and those having an excellent electrolyte liquid moisture-containing ability while having low resistance against ion migration of the electrolyte liquid are particularly preferred.

For example, as the separator, a porous polymer film including a polyolefin-based polymer such as an ethylene homopolymer, a propylene homopolymer, an ethylene/butene copolymer, an ethylene/hexene copolymer, and an ethylene/methacrylate copolymer, or a laminated structure of two or more layers thereof may be used. Further, a typical porous nonwoven fabric, for example, a nonwoven fabric made of a glass fiber having a high melting point, a polyethylene terephthalate fiber or the like can also be used as the separator.

Alternatively, it may be an SRS (Safety Reinforced Separator) having a structure in which a coating layer containing a binding material and inorganic particles is formed on one side or both sides of the polymer substrate as described above.

The inorganic particles enable formation of empty spaces between inorganic particles and thus play role of a spacer that forms micropores and keeps a physical shape as well. Because the inorganic particles generally have a characteristic that does not change physical properties even at a temperature as high as 200°C or above, the formed organic/inorganic mixture layer has excellent thermal resistance.

The inorganic particles are not particularly limited as long as they are stable electrochemically. That is, the inorganic particles that can be used in the present disclosure is not particularly limited if an oxidization and/or a reduction reaction does not occur in an operating voltage range of a battery in use. In particular, when the inorganic particles having an ion transfer ability are used, it is possible to increase the ionic conductivity and facilitate performance enhancement within the electrochemical device, and thus, the inorganic particles with higher ionic conductivity are preferred. Further, when the inorganic particles have a high density, there is also the problem of weight increase of the secondary battery during manufacturing as well as difficulty in dispersing during manufacturing. Therefore, if possible, the inorganic particles with a lower density may be preferred. Further, the inorganic particles having a high dielectric constant may contribute to an increased dissociation of the electrolyte salt (e.g., lithium salt) within liquid electrolyte, thereby enhancing ionic conductivity of the electrolyte. Finally, inorganic particles having thermal conductivity have excellent heat absorption ability, and thus, heat is locally concentrated to form heat generating points, thereby suppressing phenomena that lead to thermal runaway, which is more preferable.

For the foregoing reasons, the inorganic particles may be preferably at least one type selected from the group consisting of (a) inorganic particles of a high dielectric constant, of which the dielectric constant is 1 or more, 5 or more, preferably 10 or more, (b) inorganic particles having piezoelectricity, (c) thermally conductive inorganic particles and (d) inorganic particles having the ability to transport lithium ions.

The piezoelectric inorganic particles refer to a material which is nonconducting under a normal pressure, but exhibits electrically conducting property due to changes of internal structure when a certain pressure is applied thereto. It is a material that has not only a high dielectric constant characteristic such as a dielectric constant of 100 or more, but also a function of generating electric potential between both surfaces when one surface is charged positive and the opposite surface is charged negative with charges generated when the piezoelectric material is tensioned or compressed by a certain pressure exerted thereto.

Examples of the inorganic particles having piezoelectricity may include $BaTiO_3$, $Pb(Zr,Ti)O_3$ (PZT), $Pb_{1-x}La_xZr_{1-y}Ti_yO_3$ (PLZT), $PB(Mg_3Nb_{2/3})O_3\text{-}PbTiO_3$ (PMN-PT) hafnia ($H_fO_2$) or a mixture thereof, but not limited hereto.

The inorganic particles having the ability to transport lithium ions refer to inorganic particles that contain lithium atoms, but have an ability to move lithium ions without storing lithium. Because the inorganic particles having the ability to transport lithium ions can transfer and migrate lithium ions because of a kind of defect present within the particle structure, it is possible to prevent a decrease in lithium mobility and thus prevent a decrease in battery capacity.

Examples of the inorganic particles having the ability to transport lithium ions may be lithium phosphate($Li_3PO_4$), lithium titanium phosphate($Li_xTi_y(PO_4)_3$, $0<x<2$, $0<y<3$), lithium aluminum titanium phosphate($Li_xAl_yTi_z(PO_4)_3$, $0<x<2$, $0<y<1$, $0<z<3$), $(LiAlTiP)_xO_y$-based glass($0<x<4$, $0<y<13$) such as $14Li_2O\text{-}9Al_2O_3\text{-}38TiO_2\text{-}39P_2O_5$, lithium lanthanum titanate($Li_xLa_yTiO_3$, $0<x<2$, $0<y<3$), lithium germanium thiophosphate($Li_xGe_yP_zS_w$, $0<x<4$, $0<y<1$, $0<z<1$, $0<w<5$) such as $Li_{3.25}Ge_{0.25}P_{0.75}S_4$, lithium nitride ($Li_xN_y$, $0<x<4$, $0<y<2$) such as $Li_3N$, $SiS_2$-based glass ($Li_xSi_yS_z$, $0<x<3$, $0<y<2$, $0<z<4$) such as $Li_3PO_4\text{-}Li_2S\text{-}SiS_2$, $P_2S_5$-based glass($Li_xP_yS_z$, $0<x<3$, $0<y<3$, $0<z<7$) such as $LiI\text{-}Li_2S\text{-}P_2S_5$, or a mixture thereof, but not limited hereto.

Further, examples of the inorganic particles having a dielectric constant of 1 or more may be $SrTiO_3$, $SnO_2$, $CeO_2$, MgO, NiO, CaO, ZnO, $ZrO_2$, $Y_2O_3$, $Al_2O_3$, $TiO_2$, SiC or a mixture thereof, but not limited hereto.

The thermally conductive inorganic particles are materials that provides low thermal resistance but does not provide electrical conductivity and thus has insulating properties, and an example thereof may be at least one selected from the group consisting of aluminum nitride(AlN), boron nitride(BN), alumina($Al_2O_3$), silicon carbide(SiC), and beryllium oxide(BeO), but not limited thereto.

When the above-mentioned high-dielectric constant inorganic particles, inorganic particles having piezoelectricity, thermally conductive inorganic particles, and inorganic particles having the ability to transport lithium ions are used in combination, synergistic effects resulting therefrom can be doubled.

The size of the inorganic particle is not limited, but to ensure appropriate porosity between the inorganic particles, the preferable size is within the range of 0.001 to 10 μm if possible. When the size is less than 0.001 μm, dispersibility is deteriorated, and physical properties are difficult to adjust. When the size is greater than 10 μm, a thickness increases, and mechanical property is deteriorated. Further, because of an excessively large pore size, the role of a coating layer is not sufficiently performed, and the possibility in which internal short circuit occurs at charging and discharging of the battery is increased.

The content of the inorganic particles is not particularly limited, but is preferably in the range of 1 to 99 wt.%, especially 10 to 95 wt.%, based on 100 wt.% of the mixture of the inorganic particles and the binding material. If the content of the inorganic particles is less than 1 wt.%, the content of the binding material may be too high so that the pore size and porosity are reduced due to a decrease in the empty space formed between inorganic particles, thereby reducing the mobility of lithium ions. On the other hand, when the content is greater than 99 wt.%, the content of the binding material is too small, so that the adhesive force between inorganic materials becomes weak and thus the mechanical properties of the coating layer are deteriorated.

Meanwhile, the binding material is not limited as long as it does not cause a side reaction with the electrolyte solution, but in particular, a binding material with a glass transition temperature(Tg) as low as possible can be used, and the temperature is preferably in the range of -200 to 200°C. This is because the mechanical properties of the final insulating film can be improved.

Further, the binding material does not necessarily have to have ion conducting ability, but it is more preferable to use a polymer having ion conducting ability.

Therefore, the binding material preferably has a high dielectric constant if possible. Actually, since the degree of dissociation of a salt in an electrolyte depends on the dielectric constant of the electrolyte solvent, the higher the dielectric constant of the polymer, the more the degree of salt dissociation in the electrolyte can be improved. The dielectric constant of the polymer may be 1 or more, specifically in the range of 1.0 to 100 (measurement frequency = 1 kHz), and particularly preferably 10 or more.

In addition to the foregoing functions, the binding material may have characteristic which can exhibit a high electrode impregnation (degree of swelling) by gelation when being impregnated into the liquid electrolyte. When the binding material has practically excellent electrode impregnation, the electrolyte injected after the battery is assembled may permeates into the polymer, and the polymer containing the absorbed electrolyte has an electrolyte ion conducting ability. Therefore, if possible, a polymer with a solubility parameter of 15 to 45 $MPa^{1/2}$ is preferred, and the ranges of 15 to 25 $MPa^{1/2}$ and 30 to 45 $MPa^{1/2}$ are more preferred. When the solubility parameter is less than 15 $MPa^{1/2}$ and more than 45 $MPa^{1/2}$, it becomes difficult to be impregnated (swelled) by a typical liquid electrolyte for batteries.

Examples of the binding material include at least one selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose and polyvinylalcohol.

The total thickness of the separator may be 5 micrometers to 20 micrometers, specifically 5 micrometers to 15 micrometers, and more specifically 6 micrometers to 13 micrometers. If the thickness of the separator satisfies the above range, it is possible to effectively prevent short circuits between the positive electrode and the negative electrode while minimizing the resistance value of the lithium secondary battery. As a result, it is possible to prevent a decrease in energy density of lithium secondary batteries and improve lifetime characteristics.

The electrolyte may be a lithium non-aqueous electrolyte, and the lithium non-aqueous electrolyte may include a lithium salt and a non-aqueous organic solvent.

In this case, the lithium salt is used as a medium for transferring ions within a lithium secondary battery. For example, the lithium salt may include $Li^+$ as a cation, and may include at least one selected from the group consisting of $F^-$, $Cl^-$, $Br^-$, $I^-$, $NO3^-$, $N(CN)2^-$, $BF_4^-$, $ClO_4^-$, $B_{10}Cl_{10}^-$, $AlCl_4^-$, $AlO_2^-$, $PF_6^-$, $CF_3SO_3^-$, $CH_3CO_2^-$, $CF_3CO_2^-$, $AsF_6^-$, $SbF_6^-$, $CH_3SO_3^-$, $(CF_3CF_2SO_2)_2N^-$, $(CF_3SO_2)_2N^-$, $(FSO_2)_2N^-$, $BF_2C_2O_4^-$, $BC_4O_8^-$, $PF_4C_2O_4^-$, $PF_2C_4O_8^-$, $(CF_3)_2PF_4^-$, $(CF_3)_3PF_3^-$, $(CF_3)_4PF_2^-$, $(CF_3)_5PF^-$, $(CF_3)_6P^-$, $C_4F_9SO_3^-$, $CF_3CF_2SO_3^-$, $CF_3CF_2(CF_3)_2CO^-$, $(CF_3SO_2)_2CH^-$, $CF_3(CF_2)_7SO_3^-$ and $SCN^-$ as an anion.

Specifically, the lithium salt may include a single material selected from the group consisting of LiCl, LiBr, LiI, $LiBF_4$, $LiClO_4$, $LiB_{10}Cl_{10}$, $LiAlCl_4$, $LiAlO_2$, $LiPF_6$, $LiCF_3SO_3$, $LiCH_3CO_2$, $LiCF_3CO_2$, $LiAsF_6$, $LiSbF_6$, $LiCH_3SO_3$, LiFSI (Lithium bis(fluorosulfonyl) imide, $LiN(SO_2F)_2$), LiBETI(lithium bis(perfluoroethanesulfonyl) imide, $LiN(SO_2CF_2CF_3)_2$ and LiTFSI (lithium bis(trifluoromethanesulfonyl) imide, $LiN(SO_2CF_3)_2$) or a mixture of two or more, but in terms of excellent stability, it is preferable to include $Li(N(SO_2CF_3)_2$.

In addition to these, the lithium salt commonly used in an electrolyte of a lithium secondary battery can be used without particular limitation.

The concentration of the lithium salt can be appropriately changed within a generally usable range, but the lithium salt may be included in the electrolyte at a concentration of 0.5 M to 3 M, specifically at a concentration of 1 M to 2.5 M, and more specifically, at a concentration of 1 M to 2 M, in the electrolyte in order to obtain an optimal effect of forming a film for preventing corrosion on the electrode surface. When the concentration of the lithium salt satisfies the above range, the effect of improving cycle characteristics during high-temperature storage of the lithium secondary battery is sufficient, and the viscosity of the electrolyte is appropriate, so that electrolyte impregnation can be improved.

The non-aqueous organic solvent is not limited as long as it may minimize decomposition due to an oxidation reaction or the like in the charge/discharge process of the lithium secondary battery, and may exhibit desired characteristics together with an additive. For example, a carbonate-based organic solvent, an ether-based organic solvent, an ester-based organic solvent, and the like may be used alone or in mixture of two or more thereof, and specifically, a carbonate-based organic solvent may be used.

The carbonate-based organic solvent among the organic solvents may include at least one selected from the group consisting of a cyclic carbonate-based organic solvent and a linear carbonate-based organic solvent. Specifically, the cyclic carbonate-based organic solvent may include at least one selected from the group consisting of ethylene carbonate(EC), propylene carbonate(PC), 1,2-butylene carbonate, 2,3-butylene carbonate, 1,2-pentylene carbonate, 2,3-pentylene carbonate, vinylene carbonate, vinylethylene carbonate, and fluoroethylene carbonate(FEC). Specifically, it may include a mixed solvent of ethylene carbonate having a high dielectric constant and propylene carbonate having a relatively low melting point compared to ethylene carbonate.

Further, the linear carbonate-based organic solvent is a solvent having low viscosity and low dielectric constant, and may include at least one selected from the group consisting of dimethyl carbonate(DMC), diethyl carbonate(DEC), dipropyl carbonate, ethyl methyl carbonate(EMC), methylpropyl carbonate, and ethylpropyl carbonate, and, more specifically, it may include dimethyl carbonate.

The ether-based organic solvent may include any one selected from the group consisting of ethylene glycol dimethyl ether, diethyl ether, dipropyl ether, methyl ethyl ether, methyl propyl ether, and ethyl propyl ether, or a mixture of two or more thereof, but is not limited thereto.

The ester-based organic solvent may include at least one selected from the group consisting of a linear ester-based organic solvent and a cyclic ester-based organic solvent.

Specific examples of the linear ester-based organic solvent may include any one selected from the group consisting of methyl acetate, ethyl acetate, propyl acetate, methyl propionate, ethyl propionate, propyl propionate, and butyl propionate, or a mixture of two or more thereof, but are not limited thereto.

Specific examples of the cyclic ester-based organic solvent may include any one selected from the group consisting of $\gamma$-butyrolactone, $\gamma$-valerolactone, $\gamma$-caprolactone, $\sigma$-valerolactone, and $\varepsilon$-caprolactone, or a mixture of two or more thereof, but are not limited thereto.

Among the ester-based solvents, since the cyclic carbonate-based compound well dissociates the lithium salt in the electrolyte due to high dielectric constant as a highly viscous organic solvent, the cyclic carbonate-based compound may be preferably used. When the cyclic carbonate-based compound is mixed with the low viscosity, low dielectric constant linear carbonate-based compound, such as dimethyl carbonate and diethyl carbonate in an appropriate ratio, an electrolyte having high electrical conductivity may be prepared, which may be more preferably used.

Moreover, the lithium non-aqueous electrolyte may further include a functional additive, and the functional additive may be included to prevent the negative electrode from decomposing in a high power environment and causing negative electrode collapse, or to further improve the low temperature high rate discharge characteristics, high temperature stability, overcharge prevention, battery expansion suppression effect during high-temperature storage, and the like.

Specifically, as a representative example, the functional additive may include at least one functional additive selected from the group consisting of a sultone-based compound, a sulfite-based compound, a sulfone-based compound, a sulfate-based compound, a halogen-substituted carbonate-based compound, a nitrile-based compound, a cyclic carbonate-based compound, a phosphate-based compound, a borate-based compound, and a lithium salt-based compound.

The sultone-based compound may include at least one compound selected from the group consisting of 1,3-propane sultone(PS), 1,4-butane sultone, ethane sultone, 1,3-propene sultone(PRS), 1,4-butene sultone, and 1-methyl-1,3-propene sultone, and may be included in an amount of 0.3 wt.% to 5 wt.%, and specifically 1 wt.% to 5 wt.% based on the total weight of the electrolyte. In a case in which the amount of the sultone-based compound in the electrolyte is greater than 5 wt.%, an excessively thick layer may be formed on the surface of the electrode to cause an increase in resistance and a degradation of output, and resistance due to the excessive amount of the additive may be increased to degrade output characteristics.

The sulfite-based compound may include at least one compound selected from the group consisting of ethylene sulfite, methylethylene sulfite, ethylethylene sulfite, 4,5-dimethylethylene sulfite, 4,5-diethylethylene sulfite, propylene sulfite, 4,5-dimethylpropylene sulfite, 4,5-diethylpropylene sulfite, 4,6-dimethylpropylene sulfite, 4,6-diethylpropylene sulfite, and 1,3-butylene glycol sulfite, and may be included in an amount of 3 wt.% or less based on the total weight of the electrolyte.

The sulfone-based compound may include at least one compound selected from the group consisting of divinyl sulfone, dimethyl sulfone, diethyl sulfone, methylethyl sulfone, and methylvinyl sulfone, and may be included in an amount of 3 wt.% or less based on the total weight of the electrolyte.

The sulfate-based compound may include ethylene sulfate(Esa), trimethylene sulfate(TMS), or methyl trimethylene sulfate(MTMS), and may be included in an amount of 3 wt.% or less based on the total weight of the electrolyte.

Further, the halogen-substituted carbonate-based compound may include fluoroethylene carbonate(FEC), and may be included in an amount of 5 wt.% or less based on the total weight of the electrolyte. In a case in which the amount of the halogen-substituted carbonate-based compound in the electrolyte is greater than 5 wt.%, the cell swelling performance may be degraded.

Further, the nitrile-based compound may include at least one compound selected from the group consisting of succinonitrile, adiponitrile(Adn), acetonitrile, propionitrile, butyronitrile, valeronitrile, caprylonitrile, heptanenitrile, cyclopentane carbonitrile, cyclohexane carbonitrile, 2-fluorobenzonitrile, 4-fluorobenzonitrile, difluorobenzonitrile, trifluorobenzonitrile, phenylacetonitrile, 2-fluorophenylacetonitrile, and 4-fluorophenylacetonitrile.

The cyclic carbonate-based compound may include vinylene carbonate(VC) or vinylethylene carbonate, and may be included in an amount of 3 wt.% or less based on the total weight of the electrolyte. If the content of the cyclic carbonate-based compound in the electrolyte is greater than 3 wt.%, the cell swelling suppression performance may be degraded.

The phosphate-based compound may include at least one compound selected from the group consisting of lithium difluoro(bisoxalato)phosphate, lithium difluorophosphate, tetramethyl trimethylsilyl phosphate, trimethylsilyl phosphite, tris(2,2,2-trifluoroethyl)phosphate, and tris(2,2,2-trifluoroethyl)phosphite, and may be included in an amount of 3 wt.% or less based on the total weight of the electrolyte.

The borate-based compound may include lithium oxalyldifluoroborate, and may be included in an amount of 3 wt.% or less based on the total weight of the electrolyte.

The lithium salt-based compound is a compound different from the lithium salt included in the lithium non-aqueous electrolyte. The lithium salt-based compound may include at least one compound selected from the group consisting of $LiPO_2F_2$, LiODFB, LiBOB (lithium bisoxalate borate($LiB(C_2O_4)_2$), and $LiBF_4$, and may be included in an amount of 3 wt.% or less based on the total weight of the electrolyte.

Two or more kinds of the functional additives may be mixed, and included in an amount of 20 wt.% or less, specifically 0.1 wt.% to 10 wt.%, based on the total weight of the lithium non-aqueous electrolyte. If the content of the functional additive is greater than 20 wt.%, there is a possibility that excessive side reactions in the lithium non-aqueous electrolyte may occur during charge and discharge of the battery. In particular, it is not sufficiently decomposed at high temperatures, and may exist as an unreacted material or in a precipitated state in the lithium non-aqueous electrolyte at room temperature. Thereby, side reactions may occur in which the lifetime or resistance characteristics of the lithium metal battery are reduced.

Hereinafter, the lithium secondary battery according to an embodiment of the present disclosure will be described with reference to Examples in order to demonstrate that it exhibits improved effects.

<Example 1>

The active material raw materials of LiOH, $MnO_2$ and $TiO_2$ were mixed at a molar ratio of 3:1:1 in accordance with the stoichiometric ratio under an Ar atmosphere, and sucrose was added for improving the conductivity so that the content in the final positive electrode active material was 0.66 wt.%, and polyvinylpyrrolidone (PVP) was added for improving the dispersibility so that the content in the final positive electrode active material was 1.34 wt.%, to thereby prepare a mixed powder.

The mixed powder was prepared by placing the active material raw materials, sucrose, and PVP in a zirconia container, using bimodal zirconia balls (10 mm, 5 mm, large diameter/small diameter weight ratio = 0.1, 1.5 times the weight of the mixed powder), purging with Ar for 1 hour, milling at 350 rpm for 1 hour, resting for 30 minutes, and repeating the milling cycle 12 times.

Subsequently, the mixed powder, in which the mixing was completed as described above, was heat-treated using a tube furnace under an Ar atmosphere. The heat treatment was performed at 600°C for 3 hours and then at 900°C for 12 hours at a heating rate of 5°C/min.

Thereby, a $Li_{1.2}Ti_{0.4}Mn_{0.4}O_2$ positive electrode active material having a coating layer including carbon and PVP formed thereon was prepared.

<Example 2>

A positive electrode active material was prepared in the same manner as in Example 1, except that in Example 1, the active material raw materials of LiOH, $MnO_2$, and $TiO_2$ were mixed at a molar ratio of 3:1:1 in accordance with the stoichiometric ratio under an Ar atmosphere, sucrose was added for improving the conductivity so that the content in the final positive electrode active material was 1.0 wt.%, and polyvinylpyrrolidone (PVP) was added for improving the dispersibility so that the content in the final positive electrode active material was 1.0 wt.%, to thereby prepare a mixed powder.

<Example 3>

A positive electrode active material was prepared in the same manner as in Example 1, except that in Example 1, the active material raw materials of LiOH, $MnO_2$, and $TiO_2$ were mixed at a molar ratio of 3:1:1 in accordance with the stoichiometric ratio under an Ar atmosphere, sucrose was added for improving the conductivity so that the content in the final positive electrode active material was 1.2 wt.%, and polyvinylpyrrolidone (PVP) was added for improving the dispersibility so that the content in the final positive electrode active material was 0.8 wt.%, to thereby prepare a mixed powder.

<Example 4>

A positive electrode active material was prepared in the same manner as in Example 1, except that in Example 1, the active material raw materials of LiOH, $MnO_2$, and $TiO_2$ were mixed at a molar ratio of 3:1:1 in accordance with the stoichiometric ratio under an Ar atmosphere, sucrose was added for improving the conductivity so that the content in the final positive electrode active material was 1.34 wt.%, and polyvinylpyrrolidone (PVP) was added for improving the dispersibility so that the content in the final positive electrode active material was 0.66 wt.%, to thereby prepare a mixed powder.

<Comparative Example 1>

A positive electrode active material was prepared in the same manner as in Example 1, except that in Example 1, the active material raw materials of LiOH, $MnO_2$, and $TiO_2$ were mixed at a molar ratio of 3:1:1 in accordance with the stoichiometric ratio under an Ar atmosphere, only sucrose was added for improving the conductivity so that the content in the final positive electrode active material was 2.0 wt.% to thereby prepare a mixed powder.

<Comparative Example 2>

A positive electrode active material was prepared in the same manner as in Example 1, except that in Example 1, the active material raw materials of LiOH, $MnO_2$, and $TiO_2$ were mixed at a molar ratio of 3:1:1 in accordance with the stoichiometric ratio under an Ar atmosphere, only sucrose was added for improving the conductivity so that the content in the final positive electrode active material was 1.34 wt.% to thereby prepare a mixed powder.

<Comparative Example 3>

In Example 1, the active material raw materials of LiOH, $MnO_2$ and $TiO_2$ were mixed at a molar ratio of 3:1:1 in accordance with the stoichiometric ratio under an Ar atmosphere to prepare a mixed powder, and the mixed powder was heat-treated using a tube furnace under an Ar atmosphere. The heat treatment was performed at 600°C for 3 hours and then at 900°C for 12 hours at a heating rate of 5°C/min. As a result, a $Li_{1.2}Ti_{0.4}Mn_{0.4}O_2$ positive electrode active material was prepared.
Subsequently, the positive electrode active material and PVDF were added to a dispersion liquid, which was stirred and added to N-methylpyrrolidone (NMP) so that the contents of carbon black and PVP in the final material were 0.66 wt.% and 1.34 wt.%.

<Experimental Example 1>

Raman spectroscopy was performed on the positive electrode active materials prepared in Examples 1 to 4 and Comparative Examples 1 to 3. Specifically, a Raman spectrum was obtained for the surface of the active material using a 532 nm laser, and peak analysis was performed based on the average spectrum for 50 points.
The peak intensity ratio value for the G band 1700/cm and D band 1400/cm, which were the main peak regions of carbon, in addition to the peak for $Li_{1.2}Ti_{0.4}Mn_{0.4}O_2$ in the peak were shown in Table 1 below.

In this case, it is judged that the crystallinity is increased as the value of the D/G band ratio is decreased.

[Table 1]

|  | D/G band ratio |
| --- | --- |
| Example 1 | 0.84 |
| Example 2 | 0.82 |
| Example 3 | 0.78 |
| Example 4 | 0.76 |
| Comparative Example 1 | 0.95 |
| Comparative Example 2 | 0.92 |
| Comparative Example 3 | 0.90 |

Referring to Table 1, it can be confirmed that when carbon and PVP were added together in the active material synthesis step so that both carbon and PVP are contained in the coating layer, the PVP material makes the carbon structure porous and crystallinity is increased.

However, it can be confirmed that when the coating layer includes only carbon or the formation of the coating layer including carbon and PVP is performed after the lithium compound is prepared, the crystallinity is reduced.

<Experimental Example 2>

The positive electrode active materials prepared in Examples 1 to 4 and Comparative Examples 1 to 3 were mixed with a conductive material(CNT) and a binder at a weight ratio of 90:5:5 in the presence of NMP solvent to prepare a positive electrode slurry, which was then coated on one side of an aluminum current collector (thickness: 12,$\mu$m) to a thickness of 60 micrometers, dried (130°C), and rolled (porosity 30 vol.%) to produce a positive electrode.

An SEM photograph of a part of the surface of the positive electrode produced using the positive electrode active material prepared in Example 1 was taken, and the result is shown in FIG. 1.

Referring to FIG. 1, it can be confirmed that the particles were aggregated together. The relatively less aggregated area (within several hundred nm in diameter) was selected from SEM photograph, and the Auger spectrum was measured using AES (Auger electron spectroscopy) device (PHI 710, ULVAC-PHI INC). The measurement conditions were as follows. 24 points of the measurement area were selected and measured for each sample, and after the Auger spectrum was obtained at each point, the ratio was calculated by dividing the content of C by the sum of the contents of C and metal (Ti, and/or Mn), and the results are shown in Table 2 below.

Here, it can be seen that as the ratio value is closer to 1, the metal content on the surface is lower, and the carbon coating is better formed, which means that the coating uniformity is improved.

[Table 2]

|  | C/(C+metal) ratio |
| --- | --- |
| Example 1 | 0.78 |
| Example 2 | 0.83 |
| Example 3 | 0.80 |
| Example 4 | 0.84 |
| Comparative Example 1 | 0.64 |
| Comparative Example 2 | 0.66 |
| Comparative Example 3 | 0.70 |

Referring to Table 2, it can be confirmed that in Comparative Examples, the coating uniformity is deteriorated due to carbon agglomeration as the carbon content increases, whereas when PVP is added together with carbon in the active material synthesis step as in the present disclosure, the coating uniformity is improved rapidly as the carbon content is increased to 1 wt.% or more.

<Experimental Example 3>

The positive electrode active materials prepared in Examples 1 to 4 and Comparative Examples 1 to 3 were mixed with a conductive material(CNT), and a binder at a weight ratio of 90:5:5 in the presence of NMP solvent to prepare a positive electrode slurry, which was then coated on one side of an aluminum current collector (thickness: 12$\mu$m) to a thickness of 60 micrometers, dried (130°C), and rolled (porosity 30 vol.%) to produce a positive electrode.

A lithium metal foil was used as the negative electrode, and a separator (polyethylene) was interposed between the positive electrode and the negative electrode to prepare an electrode assembly, and an electrolyte prepared by dissolving LiPF$_6$ at 1.0 M in a non-aqueous organic solvent having a composition of ethylene carbonate (EC): ethyl methyl carbonate (EMC) = 50:50 (volume ratio) was injected into the electrode assembly to produce a half-cell.

The half-cell was charged with a constant current of 0.1C at 25°C until the voltage reached 4.8V, and discharged with a constant current of 0.1C until the voltage reached 1.5V. The initial charge capacity and initial discharge capacity obtained therefrom are shown in Table 3 below, and the ratio of the initial discharge capacity to the initial charge capacity is shown in Table 3 below as the initial efficiency.

In addition, the battery capacity was measured while repeating the charge/discharge cycle 30 times in the range of 1.5~4.5V at 0.1C at 45°C, and the capacity ratio at the 30th cycle relative to the 1st cycle is shown in Table 3 below as the capacity retention.

[Table 3]

|  | Initial charge capacity (mAh/g) | Initial discharge capacity (mAh/g) | Initial efficiency (%) | Capacity retention (%) |
|---|---|---|---|---|
| Example 1 | 248 | 228 | 91.9 | 73 |
| Example 2 | 250 | 231 | 92.4 | 81 |
| Example 3 | 254 | 240 | 94.5 | 88 |
| Example 4 | 261 | 251 | 96.2 | 93 |
| Comparative Example 1 | 220 | 198 | 90.0 | 60 |
| Comparative Example 2 | 232 | 212 | 91.3 | 71 |
| Comparative Example 3 | 236 | 217 | 91.5 | 70 |

Referring to Table 3, it can be confirmed that when PVP is added together with a carbon precursor according to the present disclosure, the capacity, efficiency and lifetime characteristics are better. In addition, it can be seen that it is better when the carbon content is 1 wt.% or more, which appears to be due to the coating uniformity.

On the other hand, when PVP and carbon are after-treated as in Comparative Example 3, there is a problem that the capacity is reduced due to carbon agglomeration or deterioration of carbon coating uniformity because PVP does not sufficiently perform the role of dispersion by simple physical stirring, and the capacity retention is also reduced, whereas according to Examples of the present disclosure, the carbon precursor and PVP increase the coating uniformity due to the calcination reaction, so that due to improving ionic conductivity, not only capacity is further enhanced, but also capacity retention is higher.

Based on the above disclosure, various applications and modifications can be carried out by those of ordinary skill in the art without deviating from the spirit and scope of the present disclosure.

[Industrial Applicability]

The positive electrode active material according to the present disclosure forms a coating layer containing carbon and a surface modifier together on the surface of an amorphous rock salt lithium compound represented by a specific chemical formula, and has surface crystallinity increased so that the D/G band ratio value is 0.7 to 0.89, whereby even with a small amount of carbon, it is possible to achieve a more uniform coating on the surface of the positive electrode active material, thereby providing the effects of exhibiting high capacity, high rate and excellent lifetime characteristics.

Claims

1.    A positive electrode active material for lithium secondary battery comprising:

a lithium compound represented by the following Chemical Formula 1, and a coating layer formed on the surface of particles of the lithium compound.

wherein the coating layer includes a carbon and a surface modifier, and

wherein the positive electrode active material has a D/G band ratio value of 0.7 to 0.89 when its surface is measured by Raman spectroscopy.

[Chemical Formula 1] $Li_{1+a}Ti_bMn_cO_{2-d}X_d$

in Chemical Formula 1,

$$0.1 \leq a \leq 0.5,\ 0.2 \leq b \leq 0.6,\ 0.2 \leq c \leq 0.6,\ 1.1 \leq (1+a)/(b+c) \leq 1.5,\ 0 \leq d \leq 0.2,$$

and

X is a halogen element.

2. The positive electrode active material according to claim 1,
wherein in Chemical Formula 1, b+c=0.8.

3. The positive electrode active material according to claim 1,
wherein the positive electrode active material has an average primary particle diameter(D50) of 10 to 100 nanometers and an average secondary particle diameter(D50) of 0.5 to 1.5 micrometers.

4. The positive electrode active material according to claim 1,
wherein the contents of the carbon and the surface modifier is 0.5 to 1.5 wt.% based on the total weight of the positive electrode active material, respectively.

5. The positive electrode active material according to claim 1,
wherein the total content of the carbon and the surface modifier is 1 to 3 wt.% based on the total weight of the positive electrode active material.

6. The positive electrode active material according to claim 1,
wherein the surface modifier is a nonionic surface modifier, which is at least one selected from the group consisting of polyvinylpyrrolidone(PVP) and polyvinyl chloride(PVC).

7. A method for preparing the positive electrode active material for lithium secondary battery according to claim 1, which is prepared by a solid phase method based on a mixture containing an active material precursor, a carbon precursor, and a surface modifier.

8. The method for preparing the positive electrode active material according to claim 7,
wherein the active material precursor is a lithium source, a manganese source, and a titanium source.

9. The method for preparing the positive electrode active material according to claim 7,
wherein the carbon precursor is at least one selected from the group consisting of citric acid and sucrose.

10. The method for preparing the positive electrode active material according to claim 7,
wherein the surface modifier is a nonionic surface modifier, which is at least one selected from the group consisting of polyvinylpyrrolidone(PVP) and polyvinyl chloride(PVC).

11. The method for preparing the positive electrode active material according to claim 7,
wherein the solid phase method involves calcinating the mixture at 550°C to 1050°C in an inert atmosphere.

12. A positive electrode in which a positive electrode mixture layer containing the positive electrode active material according to claim 1 is formed on one side or both sides of a positive electrode current collector.

13. The positive electrode according to claim 12,
wherein a ratio of the content of carbon to the content of carbon and metal (Ti and Mn) represented by the following Equation 1 in the positive electrode active material is 0.75 to 0.9.

[Equation 1]

C content/(C+Metal) content

**14.** A lithium secondary battery comprising the positive electrode according to claim 12.

[Equation 1]

C content/(C+Metal) content

[FIG. 1]

## INTERNATIONAL SEARCH REPORT

| International application No. |
| --- |
| **PCT/KR2024/019232** |

| A. | CLASSIFICATION OF SUBJECT MATTER |
| --- | --- |

**H01M 4/36**(2006.01)i; **H01M 4/485**(2010.01)i; **H01M 4/66**(2006.01)i; **H01M 10/052**(2010.01)i; **C01G 45/12**(2006.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 4/36(2006.01); C01B 32/05(2017.01); H01M 4/13(2010.01); H01M 4/139(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극(cathode), 활물질(active material), 카본(carbon), 표면(surface), 무질서암염 (disordered rock salt), 개질제(modifier), 이차전지(secondary battery)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2019-0083701 A (LG CHEM, LTD.) 15 July 2019 (2019-07-15)<br>See claims 1, 6, 8, 10, 14 and 17, and paragraphs [0064], [0066], [0101] and [0102]. | 1-14 |
| Y | KR 10-2013-0013524 A (SAMSUNG SDI CO., LTD.) 06 February 2013 (2013-02-06)<br>See claims 1, 3 and 17. | 1-14 |
| A | XU, J. Cobalt-Free Cathode Materials for Li-Ion Batteries: Synthesis, Processing, Characterization and Evaluation of the Electrochemical Performances. Rice University. 2023, thesis no. 31533114, inner pp. 1-137 (publication date April 2023).<br>See abstract, inner pages 20, 22, 23 and 44, and Figure 2.11. | 1-14 |
| A | HUANG, B. et al. Enhanced Cycling Stability of Cation Disordered Rock-Salt Li1.2Ti0.4Mn0.4O2 Material by Surface Modification With Al2O3. Frontiers in Chemistry. 2019, vol. 7, inner pp. 1-8 (publication date:04 March 2019).<br>See abstract, and inner page 1. | 1-14 |

☑ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 March 2025** | **05 March 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

International application No.

**PCT/KR2024/019232**

### C. DOCUMENTS CONSIDERED TO BE RELEVANT

| Category* | Citation of document, with indication, where appropriate, of the relevant passages | Relevant to claim No. |
|---|---|---|
| A | CN 108807978 A (NANTONG BAICHUAN NEW MATERIAL CO., LTD. et al.) 13 November 2018 (2018-11-13)<br>See claims 1-3. | 1-14 |

Form PCT/ISA/210 (second sheet) (July 2022)

## INTERNATIONAL SEARCH REPORT
### Information on patent family members

International application No.

**PCT/KR2024/019232**

| Patent document cited in search report | | | Publication date (day/month/year) | Patent family member(s) | | | Publication date (day/month/year) |
|---|---|---|---|---|---|---|---|
| KR | 10-2019-0083701 | A | 15 July 2019 | KR | 10-2429236 | B1 | 05 August 2022 |
| KR | 10-2013-0013524 | A | 06 February 2013 | KR | 10-1265195 | B1 | 27 May 2013 |
| | | | | US | 2013-0029220 | A1 | 31 January 2013 |
| | | | | US | 8771878 | B2 | 08 July 2014 |
| CN | 108807978 | A | 13 November 2018 | | None | | |

Form PCT/ISA/210 (patent family annex) (July 2022)

**EP 4 738 461 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020230169859

- KR 1020240173826